Europäisches Patentamt

European Patent Office  (11) Numéro de publication:  **0 197 849**

Office européen des brevets  **A1**

(12) **DEMANDE DE BREVET EUROPEEN**

(21) Numéro de dépôt: 86400675.4

(51) Int. Cl.⁴: **H 02 K 49/06**
**H 02 K 51/00**

(22) Date de dépôt: 27.03.86

(30) Priorité: 05.04.85 FR 8505257

(43) Date de publication de la demande:
15.10.86 Bulletin 86/42

(84) Etats contractants désignés:
AT BE CH DE FR GB IT LI LU NL SE

(71) Demandeur: CGEE ALSTHOM Société anonyme dite:
13, rue Antonin Raynaud
F-92309 Levallois-Perret(FR)

(72) Inventeur: Pouillange, Jean
7 allée des Sylphides Gressy
F-77410 Claye Souilly(FR)

(72) Inventeur: Amiet, Michel
133 Avenue Versailles
F-75016 Paris(FR)

(74) Mandataire: Weinmiller, Jürgen et al,
Lennéstrasse 9
D-8133 Feldafing(DE)

(54) Réducteur de vitesse de type vernier.

(57) Le réducteur de vitesse de type vernier comprend un stator (20) muni d'une pluralité de blocs (21) munis de dents (22) électromagnétiques, lesdits blocs (21) étant associés à des moyens leur permettant d'occuper plusieurs positions angulaires données, un premier rotor (30) en relation vernier avec le stator (20) et comprenant des dents (32) de même pas que celles (22) du stator (20) et disposées en plusieurs groupes séparés par des entrefers radiaux (34), et un second rotor (45), ledit second rotor (45) étant muni de bobinages (46) alimentés en courant continu à travers un commutateur déterminant plusieurs polarités rotoriques, le nombre de positions des blocs (21) du stator (20) étant égal à celui des polarités rotoriques, chaque polarité donnant lieu à une configuration angulaire des blocs déterminée.

FIG.5

Réducteur de vitesse de type Vernier.

L'invention concerne un réducteur de vitesse de type Vernier.

Les réducteurs de vitesse mécaniques à engrenages présentent les inconvénients d'être bruyants et sujets à une usure entraînant des jeux, de nécessiter une maintenance lourde et d'être d'un prix de revient important.

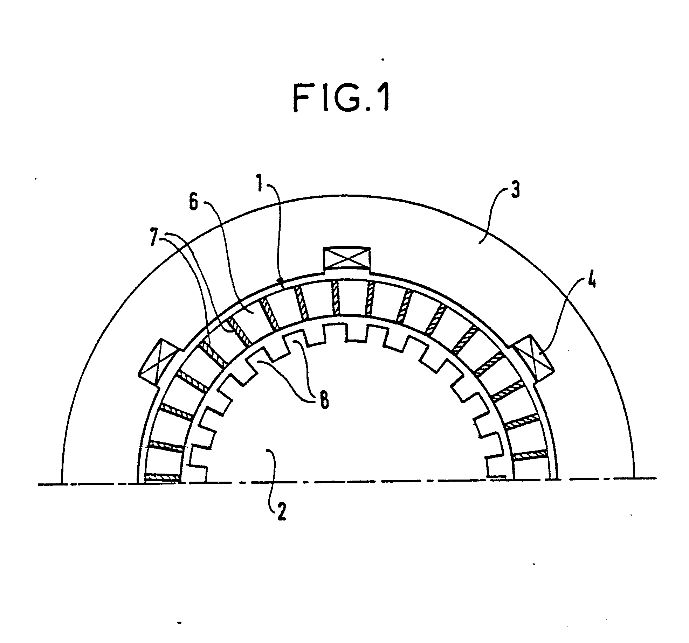

On connaît, notamment par la demande de brevet français n° 8405888 déposée le 13 avril 1984, un réducteur électrique de type Vernier. Il comprend, comme le montre la figure 1, un stator 1 en relation vernier avec un premier rotor 2 et un second rotor 3 muni d'un bobinage 4 multipolaire à courant continu.

La relation vernier entre le stator et le premier rotor est réalisée de manière connue, par exemple en dotant le stator 1 de np pas électromagnétiques 6 séparés par des entretoises 7 en matériau amagné-tique, (p étant le nombre de paires de pôles du second rotor 3) et le premier rotor de (n+1) p dents (8), n étant un nombre entier.

Par pas électromagnétique ou pas en abrégé, on entend un motif répétitif à aimants et/ou à réluctance variable, garnissant l'armature considérée.

Si le second rotor est entraîné mécaniquement à une vitesse V1, le premier rotor tourne à une vitesse $\dfrac{V1}{n+1}$ .

Un tel réducteur, sans pièces mécaniques en frottement, est très durable, a un couplage synchrone très raide vu de la sortie basse vitesse, est de maintenance légère et peut être réalisé de manière à être beaucoup moins bruyant que les réducteurs mécaniques.

Un inconvénient de ce type de réducteur est qu'il ne possède qu'une seule valeur du rapport de réduction. Un but de la présente invention est de réaliser un réducteur vernier ayant un rapport de réduction pouvant prendre au moins deux valeurs, et possédant des moyens pour passer aisément et rapidement d'une valeur à l'autre.

On rappelle qu'un effet vernier entre deux armatures peut résulter de deux types de structure. Dans le premier type, rappelé ci-dessus, les deux armatures possèdent des pas dentaires inégaux.

Dans le second type, les armatures possèdent des pas dentaires égaux, régulièrement distribués sur la première armature ; sur la seconde armature, les pas dentaires sont répartis en paquets ou blocs progressivement décalés par rapport aux pas de la première armature, de telle sorte que pour une machine de polarité p il soit, par exemple, nécessaire de faire tourner de p pas la première armature pour que la configuration tourne d'un tour.

Un tel système du second type correspond à un système du premier type en associant pn pas sur une armature à p (n+1) pas sur l'autre.

Autrement dit, dans le cas du système vernier du second type, quand la première armature à q pas tourne d'un pas, soit d'un angle $\frac{2\pi}{q}$ , la configuration vernier tourne de l'angle $2\pi$. Le rapport de réduction est donc $R = \frac{q}{p}$ et dépend donc de la polarité du système.

La présente invention met en oeuvre des systèmes vernier du deuxième type.

L'invention a pour objet un réducteur de vitesse de type vernier caractérisé en ce qu'il comprend un stator muni d'une pluralité de blocs munis de pas électromagnétiques, lesdits blocs étant associés à des moyens leur permettant d'occuper plusieurs positions angulaires données, un premier rotor en relation vernier avec le stator et comprenant des dents de même pas que celui du stator, et disposées en plusieurs groupes séparés par des entrefers radiaux et un second rotor, ledit second rotor étant muni de bobinages alimentés en courant continu à travers un commutateur déterminant plusieurs polarités rotoriques, le nombre de positions des blocs du stator étant égal à celui des polarités rotoriques, chaque polarité donnant lieu à une configuration angulaire des blocs déterminée.

L'invention sera bien comprise par les explication ci-après en référence au dessin annexé dans lequel :

- la figure 1 représente schématiquement un réducteur vernier selon l'art connu,

- les figures 2 et 3 sont des schémas expliquant le principe du réducteur vernier de l'invention,

- la figure 4 est une vue partielle en coupe axiale d'un réducteur selon l'invention,

- la figure 5 est une vue agrandie d'une partie de la figure 4.

- la figure 6 est une vue en perspective d'un dispositif de manoeuvre à deux positions d'un bloc statorique,

- la figure 7 est une vue en coupe transversale d'un dispositif de manoeuvre d'un bloc statorique selon une variante,

- la figure 8 est une vue schématique d'un réducteur selon une variante de réalisation.

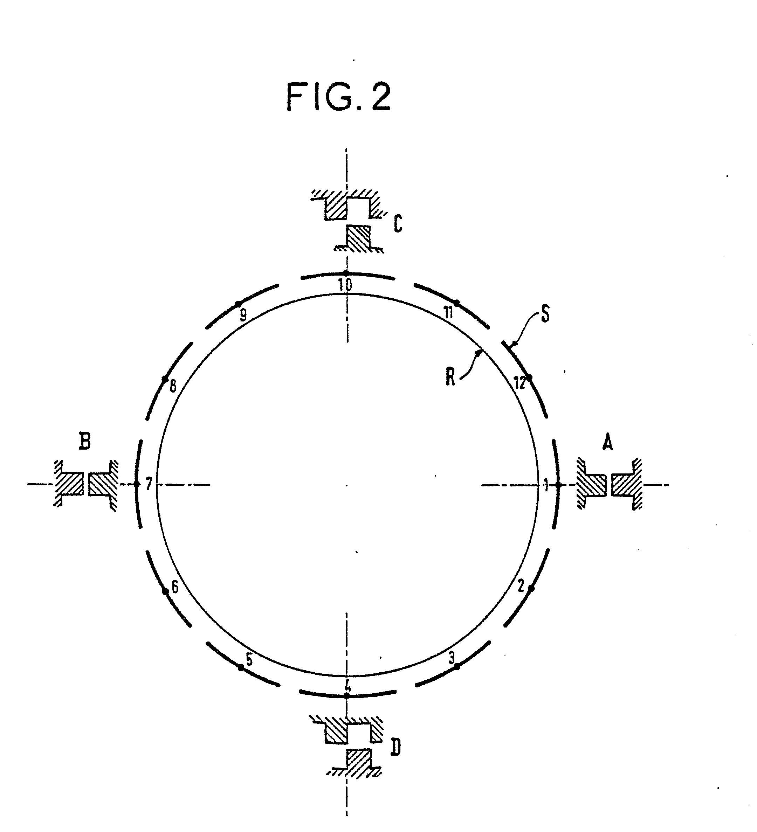

Considérons la figure 2 dans laquelle la circonférence S représente symboliquement un stator d'un réducteur vernier comprenant 12 groupes de pas électromagnétiques de valeur donnée ; la circonférence R symbolise un rotor ayant des pas électromagnétiques de même valeur. Les groupes sont numérotés de 1 à 12. La position angulaire du groupe n° 1 est invariable, mais les autres groupes peuvent être décalés angulairement d'une fraction de pas.

Pour faciliter la compréhension on peut dire qu'un pas électromagnétique est constitué par exemple de dents séparées par des creux de même largeur que les dents.

Dans une première configuration (figure 2), lorsqu'une dent rotorique et une dent statorique coïncident en A, une autre dent rotorique et une autre dent statorique coïncident en B, à 180 degrés de A. En C et D, les dents rotoriques et statoriques sont décalées d'un pas.

Cette première configuration est à 4 pôles ; lorsque le rotor se déplace de deux pas, la configuration de réluctance accomplit un tour complet. Si q est le nombre de dents du rotor, le rapport vernier R est égal à $\frac{q}{2}$ .

Si $V_S$ est la vitesse de rotation du champ inducteur et $V_R$ la vitesse du rotor,

on a $V_R = V_S \times \frac{q}{2}$ .

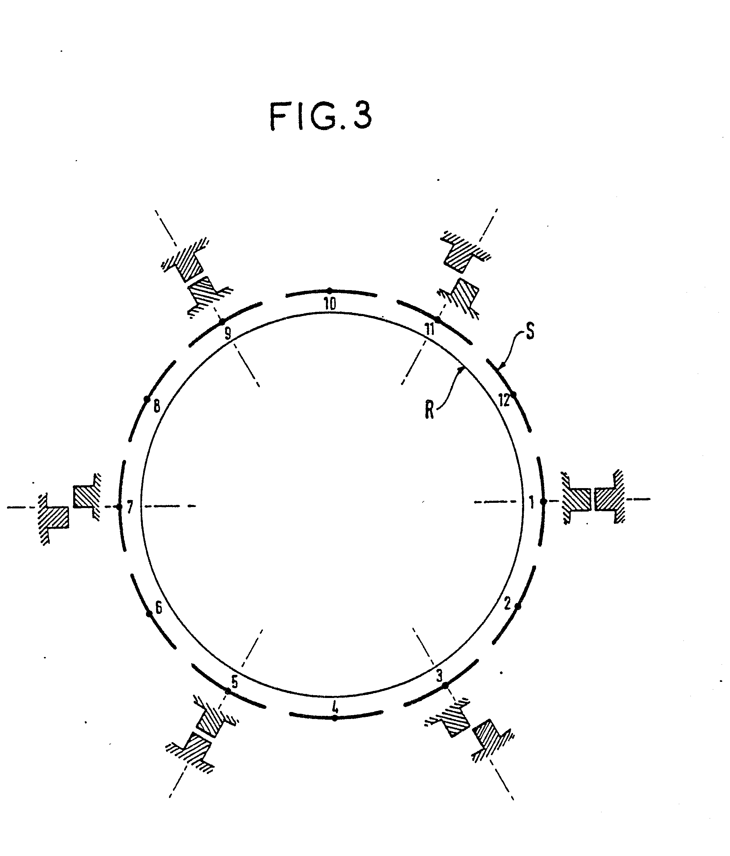

On peut maintenant décaler les groupes, sauf le groupe 1 qui reste fixe, de manière à obtenir la configuration de la figure 3, dans laquelle on trouve des coïncidences à 120 et 240 degrés de A (groupe 5 et 9).

On a cette fois une configuration à 6 pôles. Le rapport de réduction vaut q/3.

Plus généralement, le rapport de réduction est égal à R = q/p ou p est la polarité de la configuration (nombre de paires de pôles).

Le tableau ci-après donne l'écart angulaire, en fraction de pas, selon plusieurs configurations, des groupes 1 à 12.

| Configuration | numéro du groupe | | | | | | | | |
|---|---|---|---|---|---|---|---|---|---|
| | 1 | 2 | 3 | 4 | 5 | 6 | 7 | 8 | ... 12 |
| 2 pôles | 0 | 0,166 | 0,33 | 0,5 | 0,66 | 0,83 | 0 | 0,166 | ... 0 |
| 4 pôles | 0 | 0,25 | 0,5 | 0,75 | 0 | 0,25 | 0,5 | 0,75... | 0 |
| 6 pôles | 0 | 0,5 | 0 | 0,5 | 0 | 0,5 | 0 | 0,5 | ... 0 |

C'est à partir des considérations ci-dessus que les inventeurs ont conçu un réducteur de vitesse vernier à rapports multiples.

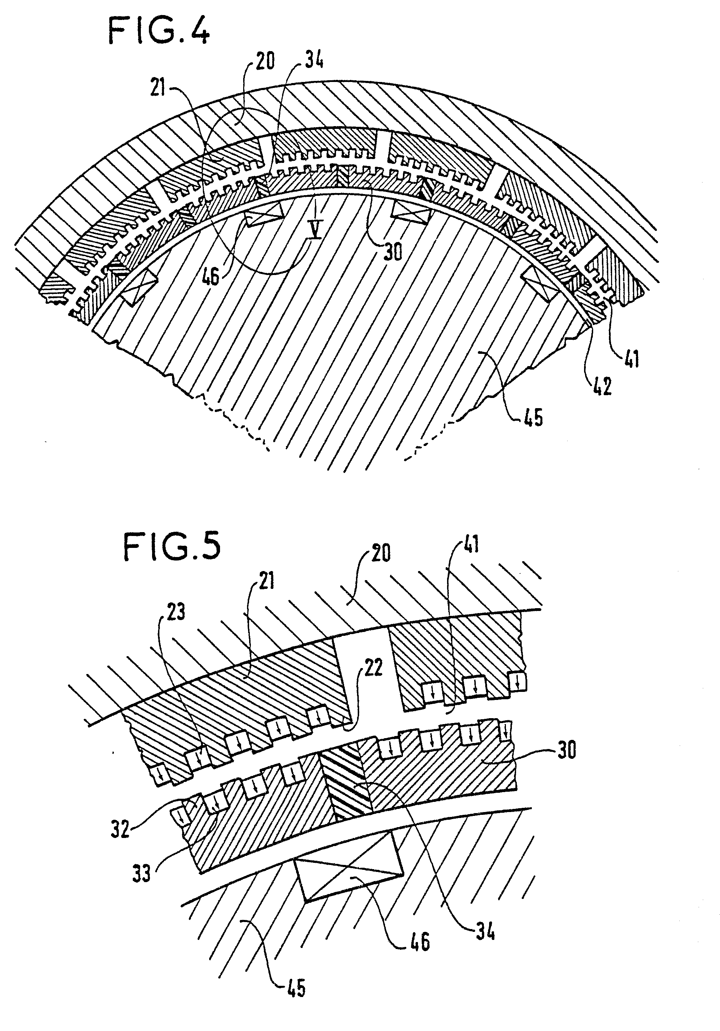

La figure 4 est une vue schématique en coupe transversale d'un tel réducteur selon un premier mode de réalisation donné à titre d'exemple. La figure 5 est une vue partielle agrandie d'une partie de la figure 4.

Le réducteur comprend une carcasse statorique 20 munie d'une pluralité de blocs 21 munis de dents 22.

Un bloc est fixe par rapport à la carcasse, les autres blocs peuvent subir des déplacements angulaires inférieurs à un pas et être immobilisés dans une nouvelle position choisie.

Les encoches entre les dents sont garnies d'aimants permanents 23 fournissant une induction radiale comme l'indiquent les flèches.

Le réducteur comprend en outre un premier rotor 30, muni de dents 32 au même pas que les dents statoriques et garnies d'aimants 33 produisant une induction radiale dans le même sens que celle produite par les aimants 23.

Le stator et le premier rotor ont leurs dents séparées par un entrefer 41. Le premier rotor est muni d'entrefers radiaux tels que 34 dont le rôle sera expliqué plus loin.

Le réducteur comprend enfin un second rotor 45 séparé du premier par un faible entrefer 42, et munis de bobinages tels que 46.

Les entrefers radiaux 34 du premier rotor 30 permettent au flux du second rotor d'atteindre le stator et de se fermer à travers lui.

Le second rotor bobiné comprend par exemple 12 bobines (46) et un nombre de bagues suffisant reliant les diverses bobines de manière à les alimenter à partir d'un organe électronique de commutation disposé au stator, pour constituer soit deux pôles (p=1) soit 4 pôles (p=2) soit 6 pôles (p=3).

En variante, le dispositif électronique de commutation est placé sur le second rotor et celui-ci peut ne comporter alors que deux bagues.

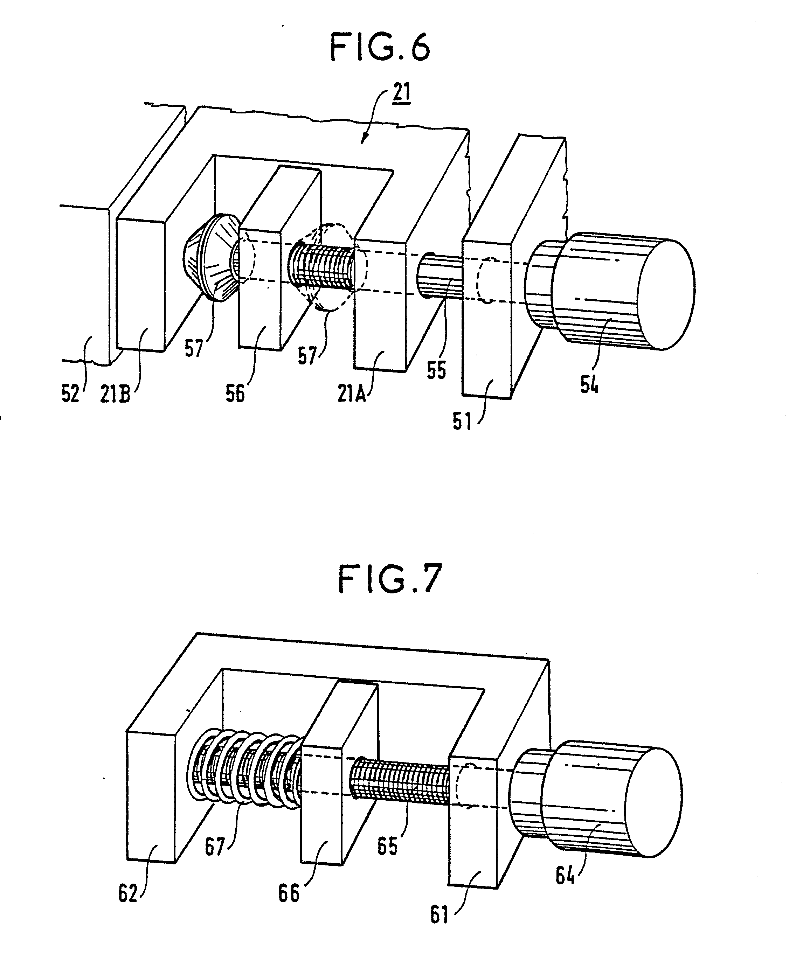

La figure 6 montre un dispositif permettant le positionnement de chaque bloc du stator selon deux positions fixes (donc deux rapports de vitesse pour le réducteur). Chaque bloc tel que 21 présente une extrémité en fourche à deux branche 21A et 21B ; les deux positions sont celles correspondant à l'application d'une des branches de la fourche sur l'une des deux butées 51, 52 fixes, liées au stator.

Un servo-moteur 54 entraîne une tige 55 munie sur une partie filetée d'un écrou 56 bloqué en rotation mais pas en translation. Des rondelles élastiques 57 sont disposées de part et d'autre de l'écrou. Ainsi la mise en butée se réalise bien et grâce aux rondelles la force d'application subsiste du fait de l'irréversibilité de la tige lorsque le servo-moteur cesse d'être alimenté.

Si l'on souhaite plusieurs rapports de réduction, on peut utiliser le dispositif de la figure 7.

L'extrémité du stator présente une pièce en fourche à deux branches 61 et 62 ; le bloc à déplacer est solidaire d'un écrou 66 asujetti à ne se déplacer qu'en translation le long d'une tige filetée 65 mue en rotation par un servo-moteur 64. Le rattrapage de jeu s'effectue par un fort ressort 67 entre l'écrou et l'une des branches de la fourche, ici la branche 62.

Le changement de polarité au niveau du second rotor est spontané si ce dernier au lieu d'être bobiné est un induit de moteur asynchrone. Cette solution se prêterait aisément à la réalisation d'un nombre de rapports élevé.

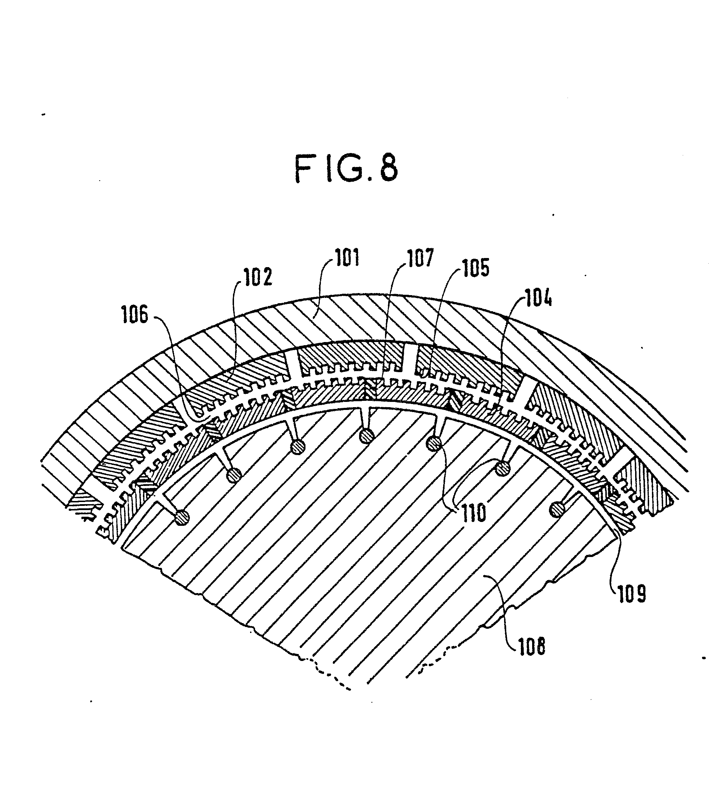

La figure 8 représente schématiquement un réducteur selon cette variante. Il comprend un stator 101 comportant des blocs de dents 102 pouvant être décalés angulairement.

Un premier rotor 104 muni de dents 105 au même pas que les dents du stator est disposé coaxialement à l'intérieur du stator dont il est séparé par un entrefer 106.

Des entrefers radiaux 107 en matériau isolant assurent que le flux statorique traverse le premier rotor. Un second rotor 108 est disposé coaxialement au premier rotor et séparé de lui par un entrefer 109.

Il est constitué comme un rotor de machine asynchrone, soit massif, soit, comme dans l'exemple, à cage 110 dans un bloc massif (en variante feuilleté), soit massif ou feuilleté recouvert d'une peau conductrice.

Toutes les solutions précédentes ont fait appel à système à 2 p pôles régulièrement répartis sur la circonférence du cercle. Si les blocs assez nombreux ne couvrent pas toute la circonférence tout en restant régulièrement décalés, le couplage du second rotor aux armatures vernier fonctionne à la manière d'une machine linéaire asynchrone enroulée autour de l'axe. Le taux de réduction peut alors être continuement variable : le réducteur de vitesse à rapports multiples est alors devenu un variateur à réduction de vitesse.

Plus généralement, le premier motif vernier dissymétrique, décrit dans la demande de brevet français n° 84 03154 du 29 février 1984, est applicable dans le sens préféré.

REVENDICATIONS

1/ Réducteur de vitesse de type vernier caractérisé en ce qu'il comprend un stator (20) muni d'une pluralité de blocs (21) munis de pas électromagnétiques, lesdits blocs étant associés à des moyens leur permettant d'occuper plusieurs positions angulaires données, un premier rotor (30) en relation vernier avec le stator et comprenant des dents de même pas que celles du stator, et disposées en plusieurs groupes séparés par des entrefers radiaux (34), et un second rotor (45), ledit second rotor étant muni de bobinages (46) alimentés en courant continu à travers un commutateur déterminant plusieurs polarités rotoriques, le nombre de positions des blocs du stator étant égal à celui des polarités rotoriques, chaque polarité donnant lieu à une configuration angulaire des blocs déterminée.

2/ Dispositif selon la revendication 1 caractérisé en ce que le second rotor (45) est disposé à l'intérieur du premier rotor (30) et en est séparé par un premier entrefer (42), le premier rotor (30) étant disposé à l'intérieur du stator (20) et séparé de ce dernier par un second entrefer (41).

3/ Dispositif selon l'une des revendications 1 et 2 caractérisé en ce que chaque bloc (21) est déplaçable entre deux butées (51, 52) solidaires du stator au moyen d'un servo-moteur (54) entraînant par une tige (55), un écrou (56) s'appuyant, par des moyens élastiques, (57) sur une fourche (21A, 21B) liée au bloc.

4/ Dispositif selon l'une des revendications 1 et 2 caractérisé en ce que chaque bloc (21) est déplaçable par un servo-moteur (64) entraînant en rotation une tige filetée (65) sur laquelle est vissé un écrou (66) fixe en rotation et solidaire du bloc.

5/ Dispositif selon l'une des revendications 1 à 4 caractérisé en ce que chaque bobinage (46) du second rotor (45) est relié par au moins une bague à un commutateur extérieur au second rotor.

6/ Dispositif selon l'une des revendications 1 à 4 caractérisé en ce que le commutateur est placé sur le second rotor.

7/ Réducteur de vitesse de type vernier caractérisé en ce qu'il comprend un·stator (101) muni d'une pluralité de blocs (102) munis de dents, lesdits blocs étant associés à des moyens leur permettant d'occuper plusieurs positions angulaires données, un premier rotor (104) en relation vernier avec le stator et comprenant des dents (105) de même pas que celles du stator et disposées en plusieurs groupes séparés par des entrefers radiaux (107) et un second rotor (108) constitué par un rotor de machine asynchrone.

8/ Réducteur de vitesse selon l'une des revendications 1 à 7 caractérisé en ce que les blocs (21, 102) du stator n'occupent qu'une partie de la périphérie statorique.

# FIG.1

# FIG.2

0197849

# FIG.3

FIG.4

FIG.5

# FIG.6

# FIG.7

# FIG.8

Office européen
des brevets

## RAPPORT DE RECHERCHE EUROPEENNE

EP 86 40 0675

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | GB-A- 13 886 (HEYS)(A.D. 1915) <br> * Page 5, lignes 11-19; page 5, ligne 25 - page 7, ligne 47; figures 3,5-9 * | 1,2,7, 8 | H 02 K 49/06 <br> H 02 K 51/00 |
| A | | 3,4 | |
| | --- | | |
| Y | FR-A-2 518 688 (SULZER ET GRADIENT) <br> * Page 2, ligne 17 - page 6, ligne 22; figures 1-6 * | 1,5 | |
| A | | 6 | |
| | --- | | |
| A | FR-A-2 517 137 (CIBIE) <br> * Page 6, lignes 4-8; figures 1,3 * | 6 | DOMAINES TECHNIQUES RECHERCHES (Int Cl 4) |
| | --- | | |
| A | FR-A-2 499 653 (CITROEN ET PEUGEOT) <br> * Figure 1 * | 3,4 | H 02 K |
| | ----- | | |

Le présent rapport de recherche a été établi pour toutes les revendications

| Lieu de la recherche | Date d'achèvement de la recherche | Examinateur |
|---|---|---|
| LA HAYE | 16-06-1986 | TIO K.H. |